# EUROPEAN PATENT SPECIFICATION

(11) **EP 2 447 136 B1**
(45) Date of publication and mention of the grant of the patent: **06.04.2016**
(21) Application number: 11186639.8
(22) Date of filing: 26.10.2011
(51) Int. Cl.: B62H 3/08

(54) **Construction, in particular construction for bicycle storage**
Fahrradabstellsystem
Système de stockage de vélos

(30) Priority: 27.10.2010 NL 2005590
(43) Date of publication of application: 02.05.2012
(73) Proprietor: Armada Group B.V., 5657 ES Eindhoven (NL)
(72) Inventor: Sluis-van der Vleuten, Katrien Arjan Simone, 6039 GJ Stramproy (NL); Zwaan, Gerardus Jacobus Leonardus, 5629 KN Eindhoven (NL)
(74) Representative: EP&C

(56) References cited:
- EP-A1- 0 939 025
- EP-A2- 1 462 348
- DE-U1-202006 005 800
- JP-A- 10 114 287
- JP-A- 2008 095 387

## Description

The invention relates to a construction, in particular a construction for a bicycle storage.

To meet an increasing need for storage space for bicycles, it is known to provide constructions in which bicycles can be stored in two tiers placed one above the other. Examples of these constructions in which bicycles are stored in two or more tiers one above the other are for instance disclosed in JP 10-114287 and JP 2008-95387.

NL 1011598 discloses a device for storing bicycles, consisting of a frame forming two levels with portals, between which horizontal joists are positioned, and provided with at least one channel profile, in which a bicycle to be stored is placeable. The channel profile is slideably accommodated in a transverse profile placed on the horizontal joists and, following complete displacement, is pivotable around at least one pivot point. The transverse profile is tiltable against a force exerted by a reset mechanism.

To store a bicycle, it is necessary first to displace the channel profile in relation to the fixed frame, and then to be able to tilt the channel profile towards a load and unload position. These two movements make the construction relatively complex, and, due to both the sliding and tilting connection, more prone to wear.

NL 1029816 discloses a device for storing bicycles, said device comprising a first tier with bicycle holders and a second tier with bicycle holders placed over the first tier, wherein at least each of the bicycle holders of the second tier is separately tiltable between a storage position and a load and unload position, wherein the pivot point of a bicycle holder of the second tier is disposed substantially level with the first tier.

Due to the fact that the pivot is disposed level with the first tier, a relatively large amount of space is required to install the pivot mechanism and to tilt the bicycle holder level with the first tier. As a result, space is lost for the lowermost tier of bicycles. Use is made here of a pivoting bicycle holder with a relatively large arm, as a result of which the forces exerted on the pivot are also relatively large. As a result, the pivot point needs to be designed as heavy and/or it is susceptible to wear.

An object of the invention is to provide a construction with which one or more objects, for example a bicycle, can be displaced between a higher-lying first position and a lower-lying second position, said construction being simple and reliable. The closest prior art document JP10-114287 discloses a construction for displacing a bicycle in accordance with preamble of claim 1.

The invention provides a construction according to claim 1.

By using a first at least partially curved profile which is pointed downwards with a concave side and is preferably set up in a fixed manner, and a second profile which can be displaced in a longitudinal direction in relation to the first profile between a high position and a low position, the one or more objects can be displaced between the high position and the low position by means of a relatively simple movement. The second profile can, for example, be displaced in relation to the first profile by means of a telescopic movement.

At least partially curved profiles are profiles which are provided with a curve over at least a part of the length thereof. The curved profiles can be obtained by bending straight profiles, or through the direct manufacture of the curved profiles. The first profile and the second profile are preferably curved in such a way that a telescopic movement over a large stroke is possible.

The second profile can preferably be displaced manually between the high position and the low position. It is also possible to do this by means of a motor, for example an electric motor.

It may be possible to provide further profiles between the first profile and the second profile, wherein the further profiles are displaceable in relation to both the first and the second profile. In this way, the stroke of the construction in relation to the length of the profiles can be increased.

In one embodiment, the second profile is displaceable between a high position, in which it substantially extends along the first profile, and a low position, in which it substantially extends in relation to the first profile.

As the first profile is curved and is pointed downwards with the concave side in the high position, the first profile can be set up relatively horizontal. In the high position of the second profile, the second profile then lies substantially at the same height, and a defined amount of space is available and accessible under the first profile. Due to the curved shape of the first profile, and because it is pointed downwards with the concave side, this space is possibly greater than if a straight profile is used.

In the low position of the second profile, the second profile assumes a more vertical position in relation to the first profile due to the curved shape of the first profile, as a result of which the second profile, in particular the end thereof facing away from the first profile, can bridge a relatively large distance in the vertical direction between the high position and the low position.

In one embodiment, the second profile is at least partially curved. In a further embodiment, the first profile is curved over the entire length thereof and/or the second profile is curved over the entire length thereof. The first profile and the second profile are preferably curved over the entire length thereof. By providing the curved shape in both the first profile and the second profile and/or allowing it to continue over the entire length of the first and/or second profile, the effect of the displacement in two directions of the second profile can be increased.

In one embodiment, the second profile is configured to hold a bicycle. The construction according to the invention is particularly suitable for storing bicycles at a relatively high-lying position. It is thereby possible, for example, to store two tiers of bicycles one above the other, or to store one tier of bicycles above a space with a different functionality, for example luggage storage or the like.

In one embodiment for holding a bicycle, the radius of the curve of the first profile and the radius of the curve in the second profile are, for example, in the 0.5 to 2 m range, preferably 0.8 - 1.5 m. For this application, the lengths of the first profile and the second profile are, for example, in the 1 - 2.5 m range, preferably in the 1.2 - 1.8 m range.

In one embodiment, the second profile comprises a run channel in which one or more wheels of the bicycle can be run and/or held. By providing a run channel, it is possible to guide and laterally support the underside of the wheels of the bicycle. This is advantageous in particular when running the bicycle on and off the second profile.

For example, the front wheel of a bicycle is first positioned in the run channel and then run upwards in the run channel until the rear wheel can also be lifted into the run channel. As an alternative, it is possible to provide a run-up channel, with which the bicycle can be run from the ground directly into the run channel of the second profile. If the bicycle is run on the second profile, the run channel prevents the wheels of the bicycle from sliding from the second profile.

The run channel has, for example, an substantially V-shaped cross-section or U-shaped cross-section with flared walls, so that it is suitable for placing and supporting bicycle wheels of different widths therein.

In one embodiment, the second profile comprises a support frame to support a front wheel or a rear wheel of a bicycle held by the second profile. As an addition to the run channel or as an alternative thereto, it is possible to provide a support frame for the front wheel and/or a support frame for the rear wheel. The support frame for the rear wheel may possibly also serve here as an aid for placing the front wheel of a bicycle on the second profile.

In one embodiment, the first profile and the second profile are box profiles, wherein the second profile is suitable for the accommodation therein of at least a large part of the first profile. By providing box profiles, a displaceable movement of the second profile in relation to the first profile is enabled in a simple and reliable manner. As an alternative, the profiles can also be open profiles.

The profiles can be set up next to one another, or one of the profiles can partially or entirely surround the other profile.

The first profile and the second profile may have any suitable cross-section in order to be displaced in a longitudinal direction in relation to one another, wherein they offer sufficient strength to hold the one or more required objects, for example a bicycle, on them.

The profiles may possibly be extrusion profiles which, for example, are produced from aluminium. The profiles may also be rolled steel profiles or roll-shaped profiles, or the first profile and the second profile may be plastic components formed by injection moulding or extrusion.

In one embodiment, the first profile is provided with an attachment means extending transversely from the first profile to attach the first profile to a support. The construction may comprise a support, for example a frame or a portal, to which one or more first profiles can be attached.

For example, a number of vertical attachment points can be provided on a crossbeam, on which the attachment means of the first profile can be placed. In one embodiment, an attachment point is formed by a vertical box, in which or around which a box extending transversely from the first profile can be placed. These boxes can then be interconnected, for example by means of a bolt connection. In this way, a reliable connection between the first profile and a support therefor is obtained in a simple manner. The profiles may also be attached to attachment points in any other manner.

In one embodiment, guide means are provided between the first profile and the second profile. To facilitate the displacement of the first profile and the second profile in relation to one another, it is advantageous to provide guide means between the first profile and the second profile. These guide means may, for example, be wheels, rollers, ball-bearings, slide profiles and/or slide blocks. The first profile and the second profile may also be guided in any other suitable manner in relation to one another.

In one embodiment, a spring means is provided, which acts between the first profile and the second profile. By providing a spring means of this type, the force for lifting the second profile from a low position to a high position can be reduced due to the fact that the force of the spring means assists with the lifting. The spring means may, for example, be a gas spring, draw spring, leaf spring or volute spring. As an alternative, a counterweight could be used. The spring means can substantially be set up in one of the two profiles.

In one embodiment, a first end of the spring means is connected in a fixed manner to the first profile, and the second end is accommodated displaceably in relation to the first profile, wherein the first end and the second end are each provided with one or more pulleys, around which an elongated, flexible element can be wound, wherein one end of the flexible element is connected to the first profile and the other end of the flexible element is connected to the second profile. The elongated, flexible element is, for example, a wire, rope, line, cable, band or the like.

Due to the curved shape of the first profile and the second profile, the spring means, for example a gas spring, may not be able to extend over a substantial length of the profiles. As a result, the usable length of the spring means is restricted. Due to the construction with a wire, the effective stroke of the spring means can be substantially extended, as a result of which, for example, a relatively short gas spring can be used for the long stroke of the second profile in relation to the first profile.

In an alternative embodiment, the spring means comprises a rotatable device, for example a roller or a wheel, mounted on one of the first profile and the second profile, said device being provided with grip elements, for example gears, which positively couple with grip elements, for example complementary gears, on a linear device, for example a gear rack or chain, which is disposed on the other of the first profile and the second profile. A spring, in particular a volute spring or draw spring, which is tensioned during the movement of the second profile between the first position, for example a high position, and the second position, for example a low position, can then be disposed between the rotatable device and the profile on which the rotatable device is mounted. During this movement, the rotatable device rolls over the linear device, so that the latter is forced to rotate, thereby tensioning the spring. During the opposite movement from the second position to the first position, the spring force of the tensioned spring will generate a force which assists with the return of the second profile to the first position.

The invention furthermore relates to a bicycle storage for storing bicycles, comprising a plurality of constructions according to the invention, wherein each of the constructions is configured to hold a bicycle.

The construction according to the invention is particularly suitable for storing bicycles in a higher-lying position. Due to the construction, it is also possible to store a second tier of bicycles under the bicycles stored on the construction, or this space can be used for placing or storing other items, such as motorcycles, luggage lockers, etc. It is also possible to provide a plurality of rows of constructions according to the invention one above the other, so that three or more tiers of bicycles can be stored one above the other.

It is noted that the construction according to the invention can also be used for other applications, for example in a warehouse, where objects can be stored in a higher position by means of the construction according to the invention, and, if necessary, can be brought in a simple manner to a lower-lying position. A plurality of profiles, for example two first profiles and two second profiles, can be provided here, wherein a holder for the objects is disposed on the two second profiles. Both of the two second profiles are then simultaneously displaceable in relation to each of the first profiles which are set up in a fixed manner, so that the holder can be displaced in a simple manner between a high and a low position.

The invention will be explained in detail below on the basis of the description of an example embodiment of the invention, wherein reference is made to the accompanying drawing, in which:
Figure 1 shows a side view of an embodiment of a construction according to the invention for storing a bicycle with the second profile in the storage position;
Figure 2 shows a side view of the embodiment from Figure 1 with the second profile in the load and unload position;
Figure 3 shows a cross-section of an embodiment of the first profile and the second profile;
Figures 4 and 5 show a side view and top view of a spring means suitable for the embodiment from Figure 1;
Figures 6 and 7 show side views of the gas spring from Figures 4 and 5 in the storage position and the load and unload position respectively; and
Figure 8 shows a perspective view of a bicycle storage with a plurality of constructions for holding a bicycle according to an embodiment of the invention.

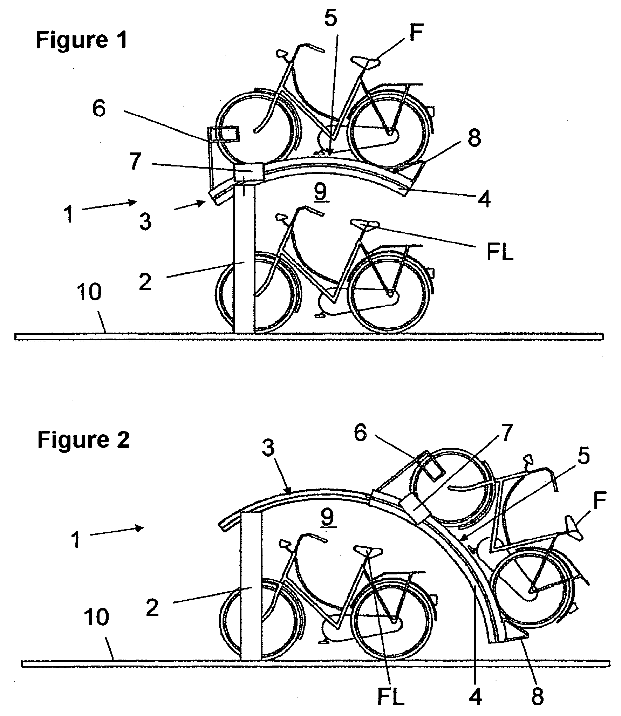

Figures 1 and 2 show a side view of a construction according to the invention, denoted in its entirety by reference number 1. The construction 1 comprises a support 2, on which a first profile 3 is attached with a fixed connection. The construction 1 comprises a second profile 4, which is disposed as telescopically movable in relation to the first profile 3. The second profile is displaceable through translation between a high position or storage position, as shown in Figure 1, and a low position or load and unload position, as shown in Figure 2. The movement of the second profile 4 in relation to the first profile 3 is limited by stops. In Figure 1 and 2, the second profile is shown in the two outermost positions in relation to the first profile 3. The second profile 4 is freely movable between these two outermost positions.

The second profile 4 has a run channel 5 for the lateral support of a front wheel and a rear wheel of a bicycle. The construction 1 furthermore comprises a first support frame 6 and a second support 7 to support/hold the front wheel of the bicycle F, and a third support frame 8 to support/hold the rear wheel of the bicycle F. The second support frame 7 is a tiltable frame which tilts when the bicycle is run onto the second profile 4 due to the running of the front wheel over the second support frame 7. After the tilting, the second support frame 7 supports the side of the front wheel facing towards the rear wheel, while the first support frame 6 supports the other side of the front wheel. An effective support of the front wheel is hereby achieved.

Due to the run channel 5 and the support frames 6, 7, 8, the construction 1 is suitable for holding a bicycle F on the second profile 4, as a result of which the bicycle F held on the second profile 4 can be displaced between a high-lying position and a low-lying position.

The first profile 3 and the second profile 4 are box profiles, wherein the first profile 3 is at least partially accommodated in the second profile 4. The first curved profile 3 and the second curved profile 4 have the same radius. The radius of the curve of the first profile 3 and the radius of the curve of the second profile may, for example, be in the 0.5 to 2 m range, preferably 0.8 - 1.5 m. The lengths of the first profile and the second profile 3, 4 are in the 1 - 2.5 m range, preferably in the 1.5 - 2 m range.

The first profile 3 is set up in a relatively horizontal position with its concave side pointed downwards. In the storage position, the second profile 4 substantially extends along the first profile 3. Since the first profile and the second profile 3, 4 then both extend substantially horizontally, a space 9, which is accessible from the right-hand side on the drawing and which can be used for storing bicycles or other objects, is created under the first profile and the second profile 3, 4. The space 9 remains when the second profile 4 is brought to the low position, but is then less readily accessible. Figures 1 and 2 show, for example, how a second bicycle FL can be placed under the first profile 3.

When the second profile 4 which holds the bicycle F is displaced to the low position, the second profile 4 assumes a more vertical position in relation to the first profile 3 due to the curved shape of the first profile 3 and the second profile 4, as a result of which the second profile 4 bridges a relatively great distance in the vertical direction. Consequently, the lower end comes relatively close to the ground 10, and, in certain embodiments, may even reach the ground 10.

In this low position or load and unload position of the second profile, a bicycle F can be placed relatively simply on the second profile 4. This can be carried out, for example, by first placing the front wheel of a bicycle F in the run channel 5 and then running the bicycle F upwards in the run channel 5 until the rear wheel can also be lifted into the run channel 5. After the rear wheel has been lifted into the run channel 5, the whole bicycle is supported on the second profile 4. The second profile 4 can then be moved to the storage position by displacing the second profile 4 with the bicycle in the longitudinal direction in relation to the first profile 3. After the second profile 4 has been brought with the bicycle F into the storage position, the bicycle FL is again accessible in the space 9.

To remove the bicycle F from the construction 1, the second profile 4 can first be moved from the storage position to the load and unload position. The bicycle F can then be run off from the second profile 4, for example by first lifting the rear wheel out of the support frame 8 and the run channel 5 and placing it on the ground, and then running the front wheel of the bicycle downwards through the run channel 5, and lifting it out of the run channel. The second profile 4 can then be returned to the storage position, so that the space 9 under the construction 1 is again accessible. This return movement can possibly also take place automatically with the aid of a spring means, such as the gas spring 12 which will be discussed below.

A blocking means can be provided to block the second profile 4 in the load and unload position, so that it cannot be drawn upwards by the gas spring 12. A user is hereby prevented from having to hold down the profile 4 during the placing of a bicycle on the second profile 4. Possibly the same blocking means or a different blocking means can be provided to block the second profile 4 in the storage position.

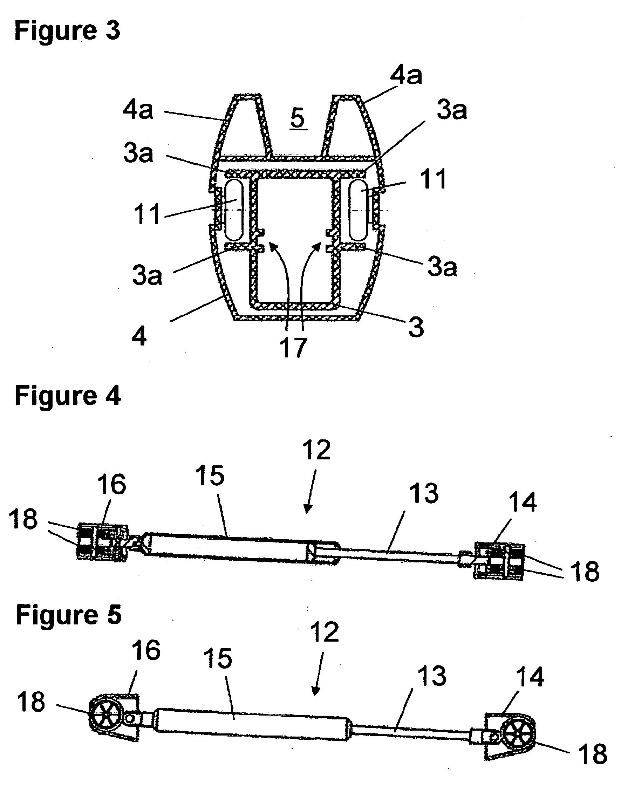

Figure 3 shows a cross-section of the first profile 3 and the second profile 4. The drawing clearly shows that the first profile and the second profile 3, 4 are box profiles, wherein the second profile 4 surrounds the first profile 3. Any other suitable cross-section of the first profile 3 and the second profile 4 can also be used.

The profiles 3, 4 are extrusion profiles produced from aluminium. As an alternative, the first profile and the second profile 3, 4 may be plastic parts formed by injection moulding or extrusion, or may be formed using any other suitable material and method, for example welded steel beams.

The second profile 4 comprises two upwardly projecting parts 4a on the upper side, between which the run channel 5 is formed. The run channel 5 has a U-shaped cross-section with flared walls, so that it is suitable for the placing and supporting therein of bicycle wheels with different widths.

Guide means are provided at different points between the first profile 3 and the second profile 4 to facilitate the displacement of the first profile 3 and the second profile 4 in relation to one another. Generally, it will be desirable to provide guide means on or near the end of the first profile 3 and on or near the end of the second profile 4, said ends always limiting the overlapping part of the first profile 3 and the second profile 4, as both profiles 3, 4 are always provided between these ends.

The guide means may, for example, comprise wheels, rollers and/or slide blocks. Figure 3 shows how two wheels 11 are connected to the second profile 4, said two wheels 11 being set up between two flanges 3a of the first profile 3. Any other suitable manner of guiding the first profile 3 and the second profile 4 in relation to one another can similarly be used.

To support the movement of the second profile 4 in relation to the first profile 3, a spring means can be provided between the first profile 3 and the second profile 4. In this spring means, in the downward movement of the second profile 4 to the low position, spring energy can be stored which is released when the second profile 4 is returned to the high position. As a result, the user is therefore assisted by the spring means in bringing the second profile 4; with a bicycle possibly placed thereon, to the high position.

Figures 4 and 5 show a possible embodiment of a spring means of this type, in the form of a gas spring 12. The gas spring 12 is mounted in the first profile 3, wherein the piston 13 of the gas spring is connected in a fixed manner via a fixed block 14 to the first profile 3. The cylinder 15 of the gas spring 12 is slideably accommodated in the first profile 3 with a slide block 16. For this purpose, the first profile 3 comprises two slide guides 17 on the inside, in which the slide block 16 can slide.

The maximum stroke of the gas spring 12 is limited by the curve of the curved first profile 3. The maximum stroke is thereby substantially smaller than the displacement of the second profile 4 between the storage position and the load and unload position. In order to extend the effective action of the gas spring 12, the fixed block 14 and the slide block 16 are provided with a number of pulleys 18, for example three pulleys in the fixed block 14 and four pulleys in the slide block 16. A wire is wound around the pulleys 18, one end of said wire being connected to the first profile 3, for example the fixed block 14, and the other end of said wire being connected to the second profile 4. Due to this wire, the effective stroke of the gas spring 12 can be substantially extended, as a result of which it can also be used for the relatively long stroke of the curved profiles 3, 4.

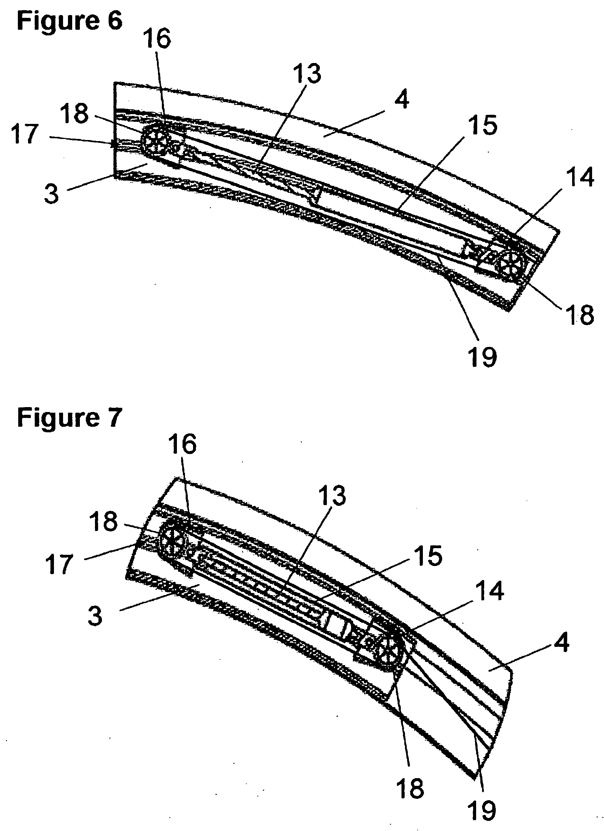

Figures 6 and 7 show the gas spring 12 disposed in the first profile 3. A wire 19 is disposed to connect the pulleys 18 to the end of the second profile 4. The second profile 4 is shown in the high position, wherein the gas spring is located in its longest state. The ends of the first profile 3 and the second profile 4 are located close to one another.

When the second profile 4 is displaced to the low position, the wire 19 is drawn along with the end of the second profile 4. As a result, the gas spring 12 will be pushed in. However, since the wire 19 has been wrapped a plurality of times around the pulleys 18 of the fixed block 14 and the slide block 16, a displacement of the second profile 4 over a defined distance will result in a much smaller displacement of the shift block 16 in relation to the fixed block 14. In this way, the gas spring 12 can deliver a force over the entire stroke of the second profile 4.

In an alternative embodiment, the spring means comprises, for example, a wheel which is mounted in the second profile, is rotatable around a centre line and is provided with gears which interwork with gears of a gear rack or the like which is disposed on the first profile. A spring, in particular a volute spring, can then be disposed between the wheel and the second profile, said spring being tensioned during the movement of the second profile between the high position and the low position. During this movement, the wheel rolls over the gear rack so that the wheel is forced to rotate, thereby tensioning the spring. During the opposite movement from the low position to the high position, the spring force of the tensioned spring will generate a force which assists with the return of the second profile to the high position.

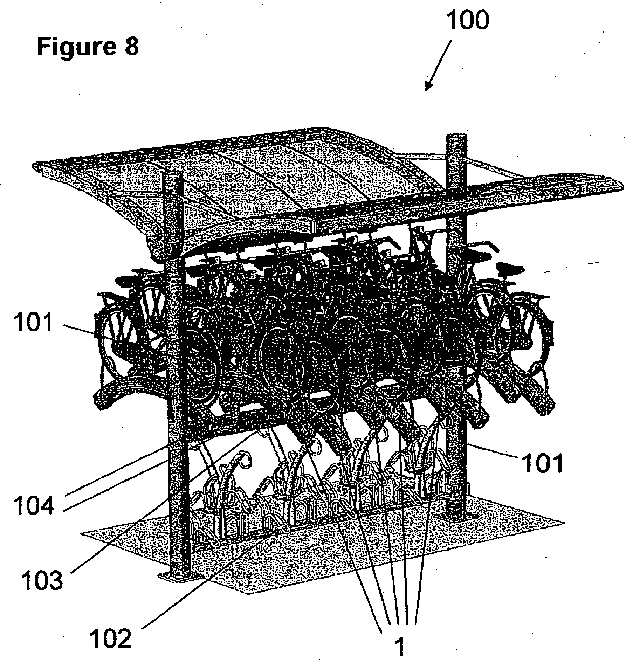

Figure 8 shows a bicycle storage 100, in which bicycles can be stored in two tiers lying one above the other. The bicycle storage 100 comprises two posts 101, on which a roof is placed. A crossbeam 102 with a number of bicycle holders is placed between the two posts 101 for the first tier of bicycles, offering the facility on both sides for storing a number of bicycles. A second crossbeam 103 is placed above the crossbeam, said second crossbeam comprising a number of attachment points 104 located next to one another for the attachment thereto of a construction 1 according to the invention. The attachment points 104 located next to one another possibly have different heights in order to store the bicycles closer to one another without the handlebars of bicycles stored next to one another getting in each other's way.

Each attachment point 104 can be formed by a vertical box, in which or around which a box extending transversely from the first profile 3 can be placed. These boxes can then be interconnected, for example by means of a bolt connection. The construction can thus be simply disposed on the attachment points 104 of the crossbeam.

Due to the construction 1 according to the invention, it is easily possible to place a bicycle on the second tier or to remove it therefrom. In addition, the first tier is also readily accessible for users who store their bicycles or other vehicle under the constructions 1. It is further noted that the space under the constructions 1 is completely free for placing, for example, bicycles.

A bicycle storage for two tiers of bicycles can thus be created in a simple manner by means of the constructions according to the invention.

## Claims

1. Construction (1) for displacing a bicycle, between a first position and a second position, wherein the first position is higher than the second position, comprising a first profile (3) and a second profile (4) displaceable in relation to the first profile, wherein the second profile is configured to hold the bicycle and the first profile (3) is at least partially curved and is set up with a concave side thereof pointed downwards in such a way that, due to a displacement of the second profile (4) in a longitudinal direction in relation to the first profile, the bicycle held by the second profile is displaceable between the first position and the second position, **characterised in that** the first profile (3) is curved over the entire length thereof and/or the second profile (4) is curved over the entire length thereof.

2. Construction (1) according to claim 1, wherein the first profile (3) is set up in a fixed manner.

3. Construction (1) according to claim 1 or 2, wherein the second profile (4) is at least partially curved.

4. Construction (1) according to one of the preceding claims, wherein the second profile (4) is displaceable in relation to the first profile (3) by means of a telescopic movement.

5. Construction (1) according to one of the preceding claims, wherein the second profile (4) is configured to hold the bicycle.

6. Construction (1) according to claim 5, wherein the second profile comprises a run channel (5) for running and/or holding therein of one or more wheels of the bicycle.

7. Construction (1) according to claim 5 or 6, wherein the second profile comprises a support frame (6, 7, 8) to support a front wheel or a rear wheel of the bicycle held by the second profile (4).

8. Construction (1) according to one of claims 5-7, wherein the first profile (3) is disposed substantially horizontally at a distance from the ground, in such a way that a further bicycle can be stored under the first profile.

9. Construction (1) according to one of the preceding claims, wherein the first profile (3) and the second profile (4) are box profiles telescopically movable in relation to one another, wherein the second profile is suitable for the accommodation therein of at least a large part of the first profile.

10. Construction (1) according to one of the preceding claims, wherein the first profile (3) is provided with an attachment means extending transversely from the first profile to attach the first profile to a support.

11. Construction (1) according to one of the preceding claims, wherein guide means (11) are provided between the first profile (3) and the second profile (4).

12. Construction (1) according to one of the preceding claims, wherein a spring means (12) is provided, acting between the first profile and the second profile.

13. Construction (1) according to the preceding claim, wherein the spring means (12) comprises a gas spring or a volute spring.

14. Bicycle storage (100) for storing bicycles, comprising a plurality of constructions (1) according to one of the preceding claims for storing the bicycles.

15. Bicycle storage (100) according to claim 14, wherein the bicycle storage is configured for storing two tiers of bicycles lying one above the other, wherein each construction (1) is configured for storing a bicycle in the uppermost tier.

## Patentansprüche

1. Konstruktion (1) zum Verschieben eines Fahrrads, zwischen einer ersten Position und einer zweiten Position, wobei die erste Position höher ist als die zweite Position, umfassend ein erstes Profil (3) und ein zweites Profil (4), das in Bezug auf das erste Profil verschiebbar ist, wobei das zweite Profil dazu ausgebildet ist, das Fahrrad zu halten, und das erste Profil (3) zumindest teilweise gekrümmt ist und derart mit seiner konkaven Seite nach unten gerichtet angeordnet ist, dass, aufgrund einer Verschiebung des zweiten Profils (4) in einer Längsrichtung in Bezug auf das erste Profil, das Fahrrad, das durch das zweite Profil gehalten wird, verschiebbar zwischen der ersten Position und der zweiten Position ist,
**dadurch gekennzeichnet, dass**
das erste Profil (3) entlang seiner gesamten Länge gekrümmt ist und/oder das zweite Profil (4) entlang seiner gesamten Länge gekrümmt ist.

2. Konstruktion (1) nach Anspruch 1, wobei das erste Profil (3) in einer festen Weise angeordnet ist.

3. Konstruktion (1) nach Anspruch 1 oder 2, wobei das zweite Profil (4) zumindest teilweise gekrümmt ist.

4. Konstruktion (1) nach einem der vorhergehenden Ansprüche, wobei das zweite Profil (4) mittels einer telekopischen Bewegung in Bezug auf das erste Profil (3) verschiebbar ist.

5. Konstruktion (1) nach einem der vorhergehenden Ansprüche, wobei das zweite Profil (4) dazu eingerichtet ist, das Fahrrad zu halten.

6. Konstruktion (1) nach Anspruch 5, wobei das zweite Profil einen Laufkanal (5) für das Laufen und/oder das Halten darin von einem oder mehreren Rädern des Fahrrads aufweist.

7. Konstruktion (1) nach Anspruch 5 oder 6, wobei das zweite Profil einen Stützrahmen (6, 7, 8) zur Unterstützung eines Vorderrades oder eines Hinterrades des Fahrrades, das von dem zweiten Profil (4) gehalten wird, aufweist.

8. Konstruktion (1) nach einem der Ansprüche 5 - 7, wobei das erste Profil (3) derart im Wesentlichen horizontal und in einem Abstand vom Boden angeordnet ist, dass ein weiteres Fahrrad kann unter dem ersten Profil aufbewahrt werden kann.

9. Konstruktion (1) nach einem der vorhergehenden Ansprüche, wobei das erste Profil (3) und das zweite Profil (4) teleskopartig in Bezug zueinander bewegliche Kastenprofile sind, wobei sich das zweite Profil für die Unterbringung darin von zumindest einem großen Teil des ersten Profils eignet.

10. Konstruktion (1) nach einem der vorhergehenden Ansprüche, wobei das erste Profil (3) mit einem Befestigungsmittel versehen ist, das sich quer von dem ersten Profil erstreckt, um das erste Profil an einem Träger zu befestigen.

11. Konstruktion (1) nach einem der vorhergehenden Ansprüche, wobei Führungsmittel (11) zwischen dem ersten Profil (3) und dem zweiten Profil (4) bereitgestellt sind.

12. Konstruktion (1) nach einem der vorhergehenden Ansprüche, wobei ein Federmittel (12) bereitgestellt ist, das zwischen dem ersten Profil und dem zweiten Profil wirkt.

13. Konstruktion (1) nach dem vorhergehenden Anspruch, wobei das Federmittel (12) eine Gasfeder oder eine Evolutfeder aufweist.

14. Fahrradaufbewahrung (100) zum Aufbewahren von Fahrrädern, umfassend eine Vielzahl von Konstruktionen (1) nach einem der vorhergehenden Ansprüche zum Aufbewahren der Fahrräder.

15. Fahrradaufbewahrung (100) nach Anspruch 14, wobei die Fahrradaufbewahrung zum Aufbewahren von zwei übereinander liegenden Reihen von Fahrrädern eingerichtet ist, wobei jede Konstruktion (1) zum Aufbewahren eines Fahrrads in der obersten Reihe eingerichtet ist.

## Revendications

1. Construction (1) pour déplacer une bicyclette, entre une première position et une seconde position, dans laquelle la première position est plus haute que la seconde position, comprenant un premier profilé (3) et un second profilé (4) déplaçable par rapport au premier profilé, dans laquelle le second profilé est configuré pour maintenir la bicyclette et le premier profilé (3) est au moins partiellement incurvé et est monté avec son côté concave orienté vers le bas de sorte que, en raison d'un déplacement du second profilé (4) dans une direction longitudinale par rapport au premier profilé, la bicyclette maintenue par le second profilé est déplaçable entre la première position et la seconde position, **caractérisée en ce que** le premier profilé (3) est incurvé sur toute sa longueur et/ou le second profilé (4) est incurvé sur toute sa longueur.

2. Construction (1) selon la revendication 1, dans laquelle le premier profilé (3) est monté d'une manière fixe.

3. Construction (1) selon la revendication 1 ou 2, dans laquelle le second profilé (4) est au moins partiellement incurvé.

4. Construction (1) selon l'une des revendications précédentes, dans laquelle le second profilé (4) est déplaçable par rapport au premier profilé (3) au moyen d'un mouvement télescopique.

5. Construction (1) selon l'une des revendications précédentes, dans laquelle le second profilé (4) est configuré pour maintenir la bicyclette.

6. Construction (1) selon la revendication 5, dans laquelle le second profilé comprend un canal de guidage (5) pour guider et/ou y maintenir une ou plusieurs roues de la bicyclette.

7. Construction (1) selon la revendication 5 ou 6, dans laquelle le second profilé comprend un châssis de support (6, 7, 8) pour supporter une roue avant ou une roue arrière de la bicyclette maintenue par le second profilé (4).

8. Construction (1) selon l'une des revendications 5 à 7, dans laquelle le premier profilé (3) est disposé de manière sensiblement horizontale à une distance du sol, de sorte qu'une autre bicyclette peut être stockée sous le premier profilé.

9. Construction (1) selon l'une des revendications précédentes, dans laquelle le premier profilé (3) et le second profilé (4) sont des profilés à caisson mobiles par voie télescopique l'un par rapport à l'autre, dans laquelle le second profilé est approprié pour loger à l'intérieur de ce dernier au moins une grande partie du premier profilé.

10. Construction (1) selon l'une des revendications précédentes, dans laquelle le premier profilé (3) est prévu avec un moyen de fixation s'étendant de manière transversale à partir du premier profilé pour fixer le premier profilé à un support.

11. Construction (1) selon l'une des revendications précédentes, dans laquelle moyens de guidage (11) sont prévus entre le premier profilé (3) et le second profilé (4).

12. Construction (1) selon l'une des revendications précédentes, dans laquelle un moyen de ressort (12) est prévu, agissant entre le premier profilé et le second profilé.

13. Construction (1) selon la revendication précédente, dans laquelle le moyen de ressort (12) comprend un ressort à gaz ou un ressort en volute.

14. Stockage de bicyclettes (100) pour stocker des bicyclettes, comprenant une pluralité de constructions (1) selon l'une des revendications précédentes pour stocker les bicyclettes.

15. Stockage de bicyclettes (100) selon la revendication 14, dans lequel le stockage de bicyclette est configuré pour stocker deux étages de bicyclettes se trouvant l'un au-dessus de l'autre, dans lequel chaque construction (1) est configurée pour stocker une bicyclette à l'étage le plus haut.
